# EUROPÄISCHE PATENTANMELDUNG

(11) **EP 2 944 830 A1**
(43) Veröffentlichungstag der Anmeldung: **18.11.2015**
(21) Anmeldenummer: 15166706.0
(22) Anmeldetag: 07.05.2015
(51) Int. Cl.: F15B 21/00

(54) **HYDRAULIKSYSTEM**

(30) Priorität: 16.05.2014 DE 102014209387
(71) Anmelder: Rausch & Pausch GmbH, 95100 Selb (DE)
(72) Erfinder: Rubitzko, Tim, 95100 Selb (DE); Lauterbach, Frank, 95100 Selb (DE)
(74) Vertreter: Klunker . Schmitt-Nilson . Hirsch

(57) **Zusammenfassung**

In einem Hydrauliksystem, welches mittels einem in einer Tankleitung (TL) angeordneten Vorspannventil (PV) oder anderen Strömungshindernis auf einen Mindestsystemdruck vorgespannt ist, ist in einer Bypassleitung (BL) zum Vorspannventil (PV) ein Evakuier- und Befüllventil (VFV) vorgesehen, durch welches hindurch das Hydrauliksystem zunächst evakuierbar und anschließend mit einem Hydraulikfluid befüllbar ist. Das Ventil (VFV) verschließt den Bypass (BL), wenn ein Differenzdruck (p₁-p₂) eine voreingestellte Kraft eines Federelements (F; 4) überwindet. Dazu besitzt das Ventil (VFV) einen verschiebbar gelagerten Ventilköper (3) mit integrierter Drossel (8) und einer Dichtfläche (7), welche eine Durchgangsöffnung (5) verschließt, wenn der Ventilkörper (3) aufgrund der Druckdifferenz entgegen der Vorspannkraft des Federelements (F) verlagert wird.

## Beschreibung

Die Erfindung betrifft ein Hydrauliksystem, insbesondere ein Hydrauliksystem wie es in einer Fahrwerksteuerung zur Wankstabilisierung eines Kraftfahrzeugs eingesetzt wird, sowie ein Ventil zur Verwendung in einem solchen Hydrauliksystem.

Hydrauliksysteme werden teilweise mit einem Druck "vorgespannt", so dass während des Betriebs im Hydrauliksystem ein Mindestdruck vorherrscht. Dadurch reagiert das System schneller auf Einwirkungen, die von außen auf Aktuatoren oder andere Bauelemente des Hydrauliksystems wirken. Derart vorgespannte Hydrauliksysteme werden auch in Fahrwerksteuerungen zur Wankstabilisierung von Kraftfahrzeugen eingesetzt. Übliche Vorspanndrücke liegen dabei zwischen 10 und 20 bar.

Bei der Inbetriebnahme eines solchen Hydrauliksystems wird das System üblicherweise zunächst evakuiert und anschließend mit dem Hydraulikmedium, in der Regel ein Öl, gefüllt. Dazu legt man z. B. am Tankanschluss des zugehörigen Ventilblocks zuerst ein Vakuum an, um die Luft aus dem Hydrauliksystem zu entfernen, und befüllt dann das Hydrauliksystem über denselben Anschluss mit dem Hydraulikfluid.

Dieser Evakuierungs- und Befüllvorgang ist bei vorgespannten Hydrauliksystemen problematisch, weil zum Aufrechterhalten des Vorspanndrucks üblicherweise in der Tankleitung des Ventilblocks ein Vorspannventil vorgesehen ist, welches erst ab einem bestimmten Systemdruck zum Tank hin öffnet. Dieser Druck liegt, wie gesagt, üblicherweise zwischen 10 und 20 bar und damit deutlich über einem Differenzdruck von 1 bar, welcher durch Anlegen eines Vakuums an den Tankanschluss des Ventilblocks beim Evakuieren des Systems maximal erreichbar wäre. Das System kann daher nicht über das Vorspannventil evakuiert werden. Auch ein Befüllen des Systems mit Hydraulikfluid wird durch das Vorspannventil blockiert.

Um das Evakuieren und Befüllen des Systems über den Tankanschluss des Ventilblocks dennoch zu ermöglichen, sind die beiden folgenden alternativen Vorgehensweisen üblich.

Gemäß der ersten Vorgehensweise ist an dem Ventilblock ein separater Zugang vorgesehen, über den das System unter Umgehung des Vorspannventils evakuiert und befüllt werden kann. Dieser Zugang wird nach dem Befüllen mechanisch verschlossen. Diese Lösung hat den Nachteil, dass eine erneute Befüllung im Reparaturfall nicht ohne Weiteres möglich ist.

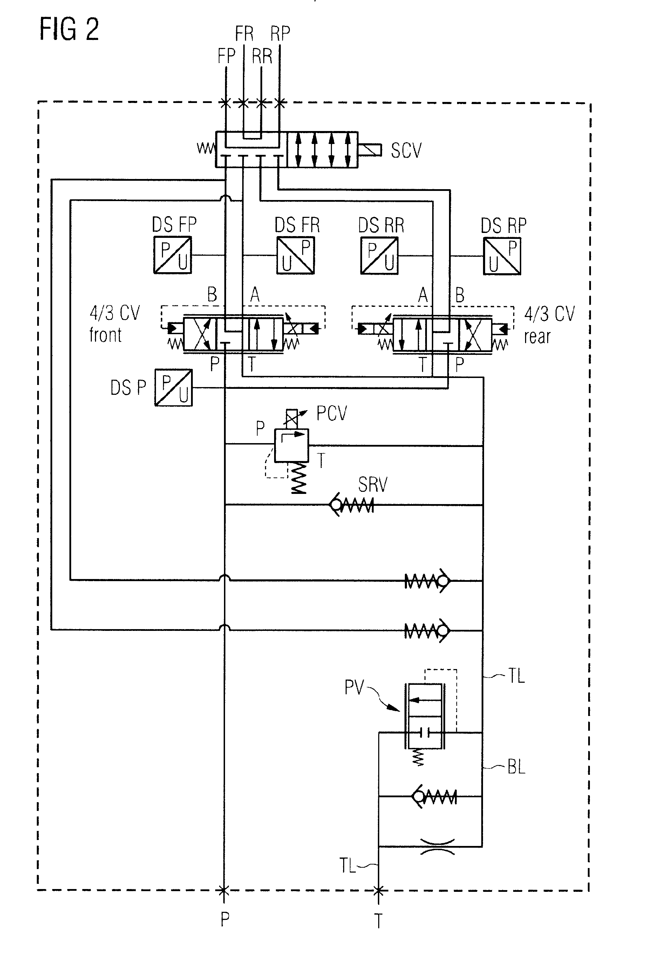

Gemäß der zweiten Vorgehensweise, welche ein Befüllen auch im Reparaturfall jederzeit ermöglicht, ist stattdessen ein Bypass zum Vorspannventil in der Tankleitung des Ventilblocks vorgesehen. In dem Bypass ist eine Ventileinrichtung angeordnet, über die das Hydrauliksystem evakuiert und befüllt werden kann. Diese Ventileinrichtung besteht aus einer Drossel und einem dazu parallel geschalteten Rückschlagventil, welches bei tankseitiger Druckbeaufschlagung öffnet und ansonsten schließt. Beim Evakuieren des Systems über den Tankanschluss des Ventilblocks wird durch die Drossel hindurch ein Vakuum im System gezogen. Anschließend wird durch das Rückschlagventil hindurch das Hydraulikmedium in das System gedrückt. Ein entsprechender Ventilblock-Hydraulikschaltplan ist in Figur 2 gezeigt. Nachteilhaft an dieser Lösung ist, dass der mit dem Vorspannventil erzielte Vorteil wieder zunichte gemacht wird, weil bei kleineren Volumenströmen bzw. relativ geringen Systemdrücken der prozentuale Anteil des Volumenstroms, der über die Drossel abfließt, so groß wird, dass der Vorspanndruck abfällt.

Aufgabe der vorliegenden Erfindung ist es daher, ein Hydrauliksystem, beispielsweise in Gestalt eines Ventilblocks, vorzuschlagen, welches eine erneute Befüllung des Systems in einfacher Weise ermöglicht und die vorgenannten Nachteile des Standes der Technik vermeidet.

Diese Aufgabe wird gemäß einer bevorzugten Ausführungsform der Erfindung durch ein Hydrauliksystem mit den Merkmalen des Anspruchs 1 und ein Ventil für das Hydrauliksystem mit den Merkmalen des Anspruchs 11 gelöst.

Dementsprechend umfasst ein Hydrauliksystem gemäß einer bevorzugten Ausführungsform der Erfindung eine Tankleitung und ein Strömungshindernis in der Tankleitung. Die Tankleitung kann z. B. ein oder mehrere Hydraulikventile des Systems mit einem Tank verbinden. In der Tankleitung kann z. B. das vorbeschriebene Vorspanventil angeordnet, welches so eingestellt oder einstellbar ist, dass es einen Durchflussweg in Richtung zum Tank öffnet, wenn in der Tankleitung an dem Vorspannventil hydraulikventilseitig ein vorgegebener Hydraulikdruck erreicht oder überschritten wird. Dieser Hydraulikdruck ist dann der Hydraulikdruck, mit dem das System vorgespannt werden kann, um eine schnellere Reaktion auf äußere Einwirkungen auf Aktuatoren oder andere Komponenten des Systems zu erhalten. Anstelle eines solchen Vorspannventils kann alternativ oder dazu parallel geschaltet eine Blende oder Drossel oder ein anderes Strömungshindernis mit äquivalenter Wirkung in der Tankleitung eingebaut sein. Drosseln und Blenden bewirken im Betrieb des Systems einen Druckabfall über die Drossel bzw. Blende und damit einen Druckaufbau in Strömungsrichtung vor der Drossel oder Blende, der jedoch im Gegensatz zum Vorspannventil abhängig ist vom aktuellen Volumenstrom.

Ähnlich wie bei dem eingangs beschriebenen Stand der Technik ist auch bei dem Hydrauliksystem gemäß dieser bevorzugten Ausführungsform der Erfindung in dem Hydrauliksystem als Bypass zu dem Strömungshindernis eine Ventileinrichtung zum Evakuieren und Befüllen des Hydrauliksystems vorgesehen, durch welche hindurch das Hydrauliksystem einerseits evakuiert werden kann, wenn in dem Hydrauliksystem Luft vorliegt und an der Ventileinrichtung tankseitig ein Unterdruck erzeugt wird, und durch welche hindurch das Hydrauliksystem andererseits von der Tankseite der Ventileinrichtung aus mit Hydraulikfluid befüllbar ist.

Das Hydrauliksystem gemäß dieser bevorzugten Ausführungsform der Erfindung unterscheidet sich vom Stand der Technik dadurch, dass die Ventileinrichtung einen Durchfluss durch den Bypass verschließt, wenn an der Ventileinrichtung hydrauliksystemseitig ein erster Hydraulikdruck und tankseitig ein zweiter Hydraulikdruck, der kleiner als der erste Hydraulikdruck ist, anliegen. Das bedeutet, dass ab einer vorgegebenen Druckdifferenz, die durch den ersten und zweiten Hydraulikdruck definiert wird, der Durchfluss durch den Bypass mittels der Ventileinrichtung verschlossen wird. Solange diese Druckdifferenz nicht erreicht wird, bleibt der Durchfluss durch den Bypass offen, beziehungsweise sobald diese Druckdifferenz unterschritten wird, öffnet die Ventileinrichtung den Durchfluss durch den Bypass.

Diese Differenzdrucklösung bietet bei der Evakuierung und nach der Befüllung des Systems verschiedene Funktionen und Vorteile. Zunächst einmal kann das System über den Bypass und durch die Ventileinrichtung hindurch evakuiert werden, solange mit dem auf der Tankanschlussseite der Ventileinrichtung angelegten Unterdruck im Vergleich zu dem (Luft-)Druck, der in der Tankleitung auf der Hydraulikventilseite der Ventileinrichtung anliegt, der Differenzdruck nicht erreicht wird. Da der hydraulikventilseitig anliegende (Luft-)Druck beim Evakuierungsvorgang maximal 1 bar beträgt und während des Evakuierungsvorgangs kontinuierlich abnimmt, ist man auf der sicheren Seite, wenn der von der Ventileinrichtung vorgegebene Differenzdruck, bei dem die Ventileinrichtung den Durchfluss schließt, auf mindestens 1 bar, vorzugsweise auf geringfügig mehr als 1 bar, beispielsweise 1,2 bar, eingestellt wird. Dann kann das Hydrauliksystem mit maximalem Unterdruck von bis zu -1 bar und dementsprechend mit maximaler Geschwindigkeit entlüftet werden.

Jedoch ist eine zügige Entlüftung auch mit geringeren Differenzdrücken möglich, beispielsweise 0,5 bar, wobei jedoch die Entlüftungsgeschwindigkeit durch Erhöhung des Differenzdrucks gesteigert werden kann. Das bedeutet beispielsweise, dass wenn die Ventileinrichtung auf einen Differenzdruck von 0,5 bar eingerichtet ist, beim Evakuierungsvorgang zunächst ein Unterdruck mit 0,5 bar angelegt wird, der in dem Maße auf einen Unterdruck bis 0 bar (Vakuum) abnimmt, wie der Luftdruck im System von 1 bar auf 0,5 bar abnimmt, und dann auf 0 bar gehalten wird, bis im gesamten System ein Vakuum gezogen ist.

Wenn das System später mit einem Hydraulikmedium, beispielsweise einem Hydrauliköl, gefüllt worden ist, schließt die Ventileinrichtung den Durchfluss durch den Bypass im Betrieb des Hydrauliksystems, sobald der Druck in der Tankleitung hydraulikventilseitig von der Ventileinrichtung um den vorgegebenen Differenzdruck über dem tankanschlussseitigen Druck liegt. Die Tankleitung wird dann erst wieder geöffnet, z. B. über das parallel geschaltete Vorspannventil, wenn der Systemdruck die wesentlich höhere Vorspannkraft des Vorspannventils überwindet. Dementsprechend bleibt die Ventileinrichtung im Betrieb tatsächlich immer geschlossen, wenn der in der Ventileinrichtung vorgegebene Differenzdruck einmal überschritten worden ist. Im Ergebnis hat dies zu Folge, dass der durch das parallel geschaltete Vorspannventil im System erzeugte Vorspanndruck auch bei kleinen Volumenströmen aufrecht erhalten bleibt. Ähnliches gilt, wenn anstelle der Vorspanneinrichtung Drosseln oder Blenden als Strömungshindernis in der Tankleitung vorgesehen werden. Die Ventileinrichtung lässt sich auf einen so geringen Differenzdruck einstellen, z. B. 0,1 bar, dass erst ab sehr geringen Strömungen der Druckabfall über die Drosseln oder Blenden des Strömungshindernisses so gering wird, dass die Ventileinrichtung öffnet.

Allerdings baut sich aufgrund von Leckageströmen auch der Vorspanndruck eines Vorspannventils ab, wenn das Hydrauliksystem längere Zeit nicht in Betrieb ist. Dies hat zur Folge, dass bei jeder erneuten Inbetriebnahme des Hydrauliksystems, das heißt bei jedem erneuten Anfahren der Pumpe des Hydrauliksystems, zunächst Hydraulikmedium über den Bypass durch die Ventileinrichtung hindurch zum Tank entweicht, bis die Druckdifferenz, auf die die Ventileinrichtung eingerichtet ist und bei der die Ventileinrichtung jeglichen weiteren Durchfluss sperrt, erreicht ist. Bis dahin wirkt die Ventileinrichtung dem Druckaufbau in dem System entgegen. Dasselbe gilt natürlich, wenn das Strömungshindernis in der Tankleitung nicht durch ein Vorspannventil sondern durch eine Drossel oder Blende gebildet wird. Um diesen unerwünschten Effekt möglichst gering zu halten, kann es vorteilhaft sein, den Differenzdruck, auf den die Ventileinrichtung eingestellt ist, möglichst niedrig, also beispielsweise mit 0,2 bar oder vorzugsweise nur 0,1 bar, zu wählen. Das bedeutet zwar auch, dass man nur mit maximal diesem geringen Differenzdruck das System evakuieren kann. Dieser Nachteil ist dann aber hinzunehmen.

Das Hydrauliksystem mit dem Vorspannventil sowie der in dem Bypass angeordneten Ventileinrichtung können beispielsweise in einem Ventilblock integriert sein.

Die vorbeschriebenen Funktionen der Ventileinrichtung können in vielfacher Weise realisiert werden, und die Ventileinrichtung kann dazu elektronische, magnetische, elektromagnetische, elektromechanische oder rein mechanische Komponenten aufweisen. Vorzugsweise besteht die Ventileinrichtung aus rein mechanisch wirkenden Komponenten, die nur durch den Differenzdruck gesteuert werden. Jedoch kann ausnahmsweise vorgesehen sein, dass Komponenten zur Einstellung des Differenzdrucks zum Beispiel elektromechanisch oder elektromagnetisch oder rein magnetisch sind.

Vorzugsweise umfasst die Ventileinrichtung mindestens eine Drossel oder Blende, und der Durchfluss durch den Bypass schließt selbsttätigt, wenn das Strömungsvolumen durch die Drossel oder Blende so groß wird, dass über die Drossel oder Blende ein Druckverlust in der Strömung auftritt, der dem in der Ventileinrichtung eingestellten Differenzdruck entspricht oder diesen überschreitet.

Dies lässt sich mechanisch einfach realisieren, wenn die Drossel oder Blende durch einen verschiebbar gelagerten Kolben gebildet wird. Beispielsweise kann der Kolben ein oder mehrere axiale Durchgangsöffnungen besitzen, die als Blende oder Drossel wirken, wenn der Kolben durchströmt wird. Alternativ oder zusätzlich kann der Kolben an seinem Umfang Nuten in Längsrichtung bzw. Verlagerungsrichtung des Kolbens aufweisen, die zusammen mit der Kolbenführung die Blende oder Drossel bilden. Genauso gut ist es möglich, dass anstelle des Kolbens die Kolbenführung solche Nuten in Längsrichtung aufweist, während die Kolbenumfangsfläche demgegenüber glatt ist. Selbstverständlich können auch sowohl der Kolben als auch die Kolbenführung entsprechende Nuten aufweisen.

Mittels des verschieblichen Kolbens kann dann der Durchfluss durch den Bypass direkt oder indirekt verschlossen werden. Gemäß einer besonders einfachen Ausführung kann der Durchfluss durch den Bypass mittels einer oder mehrerer Stirnflächen des Kolbens verschlossen werden, insbesondere wenn der Durchfluss durch axiale Durchgangsöffnungen der Ventileinrichtung hindurch erfolgt. Alternativ ist es aber auch möglich, mittels Umfangsflächen des Kolbens beispielsweise radiale Durchgangsöffnungen der Ventileinrichtung zu verschließen, um den Durchfluss durch den Bypass zu stoppen. In jedem Falle besitzt der verschiebbar gelagerte Kolben vorzugsweise eine oder mehrere Dichtflächen zum Verschließen des Durchflusses durch den Bypass.

Um die Ventileinrichtung auf den vorgegebenen Differenzdruck einzustellen, ab dem die Ventileinrichtung den Durchfluss durch den Bypass verschließt, umfasst die Ventileinrichtung vorzugsweise eine Vorspanneinrichtung, welche vorzugsweise als mechanische Vorspanneinrichtung, insbesondere als mechanisches Federelement, ausgeführt ist. Beispielsweise kann die Vorspanneinrichtung dazu dienen, eine Vorspannkraft auf einen Ventilkörper, insbesondere den vorgenannten verschiebbaren Kolben, auszuüben, und den Ventilkörper so in eine Offenstellung zu drängen, in der der Ventilkörper einen Durchflussweg freigibt. Wenn eine an der Ventileinrichtung anliegende Druckdifferenz eine der Vorspannkraft entgegengesetzte Kraft erzeugt, die diese Vorspannkraft überwindet, verlagert sich der Ventilkörper entgegen der Vorspannkraft der Vorspanneinrichtung in eine Schließstellung, in der der Durchflussweg verschlossen ist. Wie zuvor ausgeführt, kann diese Druckdifferenz dadurch erzeugt werden, dass der Ventilkörper als verschiebbarer Kolben mit integrierter Blende oder Drossel ausgebildet wird, so dass beim Durchströmen der Blende oder Drossel ein Druckverlust in der Strömung auftritt, der den Kolben in die Schließstellung drängt.

Nachfolgend wird die Erfindung beispielhaft anhand der begleitenden Zeichnungen näher erläutert. Darin zeigen:
Figur 1 den Schaltplan eines Ventilblocks mit einer Ventileinrichtung (VFV) gemäß einem ersten bevorzugten Ausführungsbeispiel der Erfindung,
Figur 2 den Hydraulikschaltplan aus Figur 1, welcher jedoch nicht erfindungsgemäß ist und statt der Ventileinrichtung (VFV) eine Drossel und ein Rückschlagventil aufweist,
Figur 3 ein Hydraulikventil als besonderes Ausführungsbeispiel für die Ventileinrichtung (VFV) in Figur 1,
Figur 4 den Schaltplan eines Ventilblocks mit einer Ventileinrichtung (VFV) gemäß einem zweiten Ausführungsbeispiel der Erfindung, und
Figur 5 den Schaltplan eines Ventilblocks mit einer Ventileinrichtung (VFV) gemäß einem dritten Ausführungsbeispiel der Erfindung.

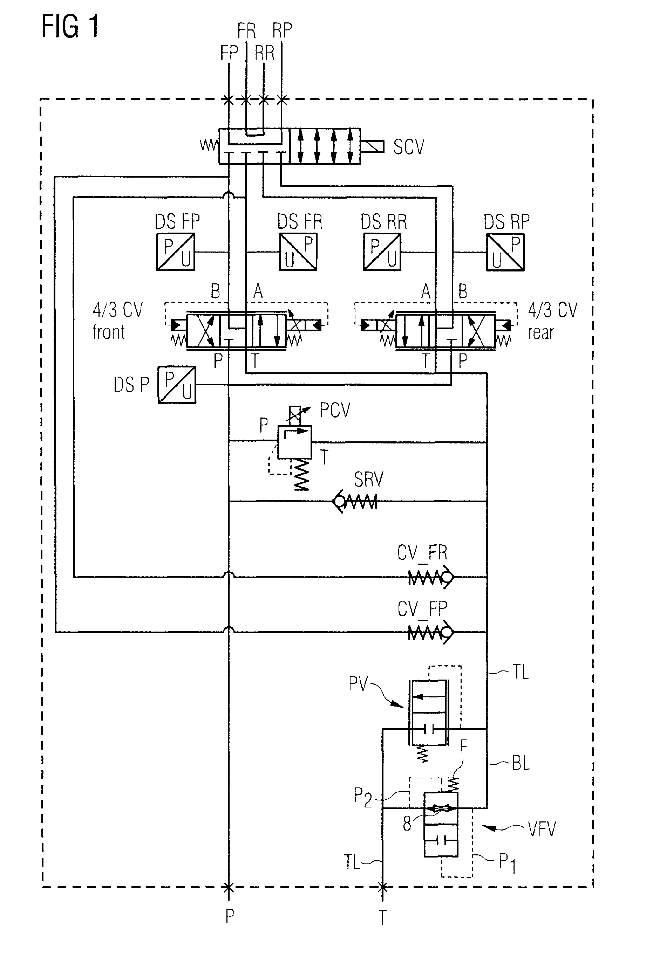

Figur 1 zeigt einen Hydraulikschaltplan für ein Hydrauliksystem gemäß einem ersten Ausführungsbeispiel, nämlich den Schaltplan eines Ventilblocks, dessen Grenzen durch einen strichlinierten Rahmen angedeutet sind. Dieses Hydrauliksystem kann Teil eines größeren Hydrauliksystems sein, und das größere Hydrauliksystem kann beispielsweise eine Pumpe und einen Tank sowie Aktuatoren und dergleichen umfassen.

Der in Figur 1 beispielhaft dargestellte Ventilblock gehört zu einer hydraulischen Fahrwerksteuerung, mit der z. B. eine Wankstabilisierung eines Fahrzeugs realisiert werden kann. Zu diesem Zweck besitzt der Ventilblock zusätzlich zu dem zur Pumpe führenden Druckanschluss P und dem zum Tank führenden Tankanschluss T mehrere Aktuatoranschlüsse. Beispielsweise können die Anschlüsse FP und FR zur Vorderachse und die Anschlüsse RP und RR zur Hinterachse des Fahrwerks führen. Sollen weniger Aktuatoren oder Achsen angesteuert werden, so entfallen entsprechend jeweils zwei Leitungen und bei mehr Aktuatoren oder Achsen gibt es jeweils zwei Leitungen mehr.

Für die Druckbeaufschlagung einer jeden Fahrwerkachse bzw. der zugehörigen Druck- und Rückführleitungen ist in dem Ventilblock ein Hydraulikventil vorgesehen, konkret ein 4/3-Wegeventil "4/3 CV Front" für die Vorderachse und ein 4/3-Wegeventil "4/3 CV Rear" für die Hinterachse. Drucksensoren DS sind jeweils an der Pumpleitung, die den Pumpanschluss mit den 4/3-Wegeventilen verbindet, und an den jeweiligen Anschlussleitungen A und B, die von den 4/3-Hydraulikventilen zu den Druck- und Rückführleitungen FP, FR, RP, RR führen, vorgesehen. Durch geeignete Ansteuerung der 4/3-Wegeventile in Abhängigkeit von den mittels der Drucksensoren DS gemessenen Drücke lässt sich die Druckverteilung im Fahrwerk sehr exakt und schnell regeln.

Abgesehen von dem nachfolgend näher beschriebenen Vorspannventil PV und Evakuier- und Befüllventil VFV sind die weiteren in dem Hydraulikschaltplan dargestellten Ventile üblich und dem Fachmann geläufig und bedürfen daher keiner detaillierteren Erläuterung.

Das Vorspannventil PV öffnet erst ab einem vorgegebenen Druck, der beispielsweise mittels eines Federelements mit der gewünschten Federkraft und Federsteifigkeit vorgegeben werden kann. In dem dargestellten Ausführungsbeispiel handelt es sich um ein Proportionalventil. Dementsprechend öffnet das Vorspannventil PV ab dem voreingestellten Druck, und der Durchflussquerschnitt des Vorspannventils PV nimmt mit zunehmendem Druck weiter zu. Mittels des Vorspannventils PV kann somit ein Druck im Hydrauliksystem voreingestellt werden, der im Betrieb des Hydrauliksystems zu jedem Zeitpunkt mindestens vorherrscht. Ein Abfluss des Hydraulikmediums aus dem Hydrauliksystem in den Tank stellt sich erst bei höheren Drücken ein. Das bedeutet, dass bei einer Pumpe, die mit einem Druck zwischen 0 bar und 200 bar betrieben werden kann, effektiv nur einen Arbeitsbereich von 10 bar bis 200 bar nutzbar ist, weil aufgrund des Vorspannventils PV bei Drücken unter 10 bar keinerlei Volumenströme im Hydrauliksystem generiert werden können. Die Bedeutung des Vorspannventils PV besteht darin, dass das Hydrauliksystem schneller auf äußere Einwirkungen an den Aktuatoren reagieren kann.

Das erstmalige Inbetriebnehmen des Hydrauliksystems erfordert zunächst das Befüllen des Systems mit einem Hydraulikmedium, in der Regel ein Hydrauliköl. Dies erfolgt über den Tankanschluss T. Dazu wird zunächst über den Tankanschluss T ein Vakuum im System gezogen und anschließend über denselben Tankanschluss T das Hydraulikmedium in das Hydrauliksystem gedrückt. Dies kann zur Beschleunigung des Befüllungsvorgangs mit einem niedrigen Druck von beispielsweise 3 bar erfolgen. Weil das Vorspannventil PV die Tankleitung sowohl beim Evakuierungsvorgang als auch beim Befüllungsvorgang sperrt, ist in der Tankleitung TL eine das Vorspannventil PV umgehende Bypassleitung BL, in welcher das Evakuier- und Befüllventil VFV angeordnet ist, vorgesehen, über die die Evakuierung des Systems und die Befüllung des Systems erfolgen.

Wie das in Figur 1 dargestellte Sinnbild für das Evakuier- und Befüllventil VFV andeutet, ist das Ventil VFV bei diesem bevorzugten Ausführungsbeispiel als 2/2-Wegeventil ausgeführt. In einer ersten, in Figur 1 dargestellten Ventilstellung stehen die beiden Anschlüsse des Ventils VFV in Verbindung, und der Durchfluss durch den Bypass BL erfolgt durch eine Drossel oder Blende 8 in dem Ventil VFV. Durch die Federvorspannung eines Federelements F wird das Ventil in diese offene Ventilstellung gedrängt. In einer zweiten Position des Ventils VFV, welche in Figur 1 nicht dargestellt ist, sind die beiden Anschlüsse des Ventils VFV voneinander getrennt. Darüberhinaus wirkt eine in der Bypassleitung BL herrschende Druckdifferenz derart auf das Ventil VFV, dass der auf der Tankanschlussseite anliegende Druck p₃ das Ventil VFV in Öffnungsrichtung und der hydraulikventilseitig anliegende Druck p₂ in Schließrichtung drängen. Wenn der Druck p₂ auf der Hydraulikventilseite größer ist als der Druck p₃ auf der Tankanschlussseite und zwar soviel größer, dass auch die Vorspannkraft des Federelementes F überwunden wird, dann bewegt sich das Ventil VFV in seine Schließstellung. Eine derartige Druckdifferenz stellt sich ein, wenn die Blende oder Drossel 8 des Ventils VFV mit einem ausreichend großen Volumenstrom durchflossen wird. Ab einer bestimmten Pumpleistung bzw. Volumenstromförderung der Pumpe schließt also das Ventil VFV den Durchfluss durch die Bypassleitung BL selbsttätig.

Betrachtet man nun die Situation des Evakuierens des Hydrauliksystems über den Tankanschluss T durch das Ventil VFV hindurch, so kann aufgrund der geringen Dichte von Luft ein relativ großer Volumenstrom durch das Ventil VFV und den Tankanschluss T hindurch abgezogen werden, ohne dass das Ventil VFV schließt. Beispielsweise können die Federkraft F und die Durchflussgeometrie der Drossel oder Blende 8 so eingestellt werden, dass das Ventil VFV bei einer Druckdifferenz von 1,2 bar schließt und diese Druckdifferenz erst bei einem Luftströmungsvolumen von 901/min erreicht wird. Bei einer Durchströmung des Ventils VFV in derselben Richtung mit Hydrauliköl stellt sich aufgrund der sehr viel höheren Dichte des Hydrauliköls dieselbe Druckdifferenz von 1,2 bar bereits bei einem sehr niedrigen Volumenstrom von z. B. nur 41/min ein. Das bedeutet, dass zwar beim Evakuieren des Systems vergleichsweise schnell viel Luft aus dem System gezogen werden kann, ohne dass das Ventil VFV schließt, dass aber das System im tatsächlichen Betrieb des Hydrauliksystems bereits bei sehr geringen Hydraulikölvolumenströmen von lediglich 41/min schließt und dann auch geschlossen bleibt, solange der Druck im Hydrauliksystem die Vorspannkraft des Federelements F überwindet. Da aber der Druck im Hydrauliksystem mittels des Vorspannventils PV immer auf einem höheren Niveau von beispielsweise 2 bar oder 5 bar, in der Regel sogar 10 oder 20 bar, gehalten wird, bedeutet dies, dass das Evakuier- und Befüllventil VFV nach dem Befüllungsvorgang, wenn dieser mit einem entsprechend hohen Druck erfolgt ist, oder spätestens nach der tatsächlichen ersten Inbetriebnahme aufgrund des hohen Systemdrucks immer geschlossen bleibt. Insbesondere treten auch keine Leckageströme durch die Drossel oder Blende 8 des Ventils VFV auf, auch nicht bei geringen Volumenströmen, anders als beim Stand der Technik (Drossel-Rückschlagventil-Anordnung in Figur 2).

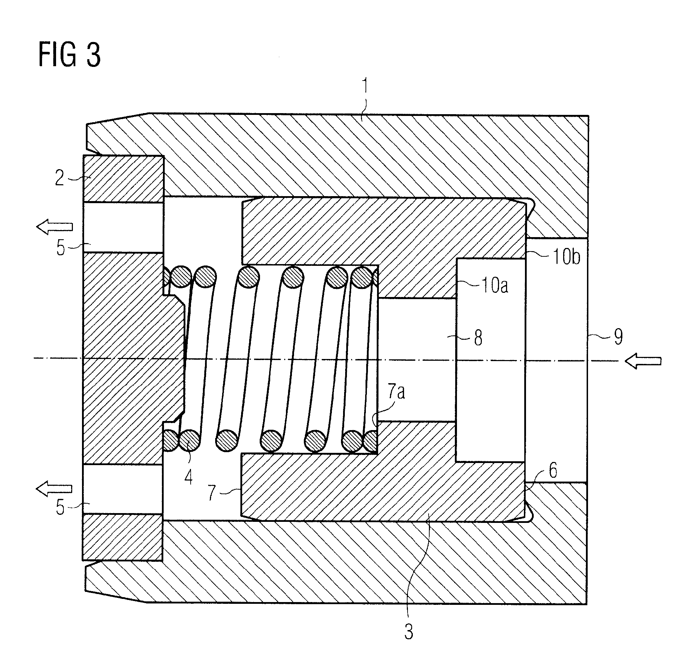

Figur 3 zeigt ein Beispiel für ein Ventil, welches als Evakuier- und Befüllventil VFV eingesetzt werden kann.

Das Ventil VFV besteht im wesentlichen aus vier Teilen, nämlich einem aus zwei Teilen 1 und 2 bestehenden Gehäuse, einem in dem Gehäuse verschiebbar gelagerten Ventilkörper 3, das die Gestalt eines Kolbens haben kann, und einem Vorspannelement 4, hier in Gestalt einer Spiralfeder. In dem äußeren Gehäuseteil 1 ist der Ventilkörper 3 axial verschieblich geführt. An einem axialen Ende des äußeren Gehäuseteils 1 ist das zweite Gehäuseteil 2 im ersten, äußeren Gehäuseteil 1 eingesetzt. Gegen das zweite Gehäuseteil 2 stützt sich das Vorspannelement 4 mit einem Ende ab und drängt mit seinem anderen Ende den Ventilkörper 3 von dem zweiten Gehäuseteil 2 weg. In dem in Figur 3 dargestellten drucklosen Zustand des Ventils VFV sind axiale Durchgangsöffnungen 5 im zweiten Gehäuseteil 2 offen, so dass ein Durchfluss durch das Ventil VFV hindurch möglich ist. Der Ventilkörper 3 stützt sich in dieser Position gegen ein Anschlag 6 des äußeren Gehäuseteils 1 ab.

Das äußere Gehäuseteil 1 und das zweite Gehäuseteil 2 können auch einstückig ausgebildet sein oder miteinander verschweißt oder verschraubt oder in anderer Weise miteinander verbunden sein. Das Federelement wiederum kann sich anstatt am zweiten Gehäuseteil 2 auch an einem entsprechenden Absatz des ersten Gehäuseteils 1 abstützen. Die Durchgangsöffnungen 5 müssen nicht notwendigerweise axial sondern können beispielsweise auch radial oder winklig zur Axialverschiebung des Ventilkörpers 3 verlaufen. Auch ist es nicht notwendig, dass die Vorspannkraft durch ein Federelement oder ein äquivalentes mechanisches Vorspannelement erzeugt wird. Sie kann stattdessen auch elektromechanisch oder magnetisch oder elektromagnetisch erzeugt werden, wird aber vorzugsweise rein mechanisch erzeugt, weil das Ventil VFV in seiner Verwendung als Evakuier- und Befüllventil nach dem Befüllvorgang nicht mehr oder nur ausnahmsweise in Reparaturfällen benutzt wird.

Wesentlich bei dem Ausführungsbeispiel gemäß Figur 3 ist vor allem, dass die Durchgangsöffnungen 5 durch Verlagerung des Ventilkörpers 3 verschließbar sind. In dem dargestellten Ausführungsbeispiel werden die Durchgangsöffnungen 5 mittels der Stirnfläche 7 des Ventilkörpers 3 verschlossen, wenn der Ventilkörper 3 entgegen der Vorspannkraft des Federelements 4 in seine (nicht dargestellte) entgegengesetzte Endposition verlagert wird.

Hier kommt nun eine wesentliche Eigenschaft des Ventilkörpers 3 ins Spiel. Denn der Ventilkörper weist die bereits in Bezug auf Figur 1 erwähnte Drossel 8 auf, die hier als zentrale Bohrung ausgeführt ist, welche gegenüber der Querschnittsfläche der Eintrittsöffnung 9 des Ventils VFV eine deutlich reduzierte Querschnittsfläche besitzt. Der Ventilkörper 3 weist dementsprechend in der mit Pfeilen gekennzeichneten Durchflussrichtung Hydraulikdruckflächen 10a, 10b in Durchflussrichtung vor und Hydraulikflächen 7, 7a in Durchflussrichtung hinter der Drossel 8 auf. Wenn nun beim Durchströmen der Drossel 8 in dieser Durchflussrichtung ein Druckverlust in der Strömung auftritt, so wirkt über die Hydraulikflächen 7, 7a und 10a, 10b ein Differenzdruck auf den Ventilkörper 3, der den Ventilkörper 3 entgegen der Vorspannkraft des Federelements 4 in Richtung der Durchgangsöffnungen 5 drängt. Sobald der Volumenstrom und damit der Differenzdruck ausreichend groß ist, um die Vorspannkraft des Federelements 4 zu überwinden, bewegt sich der Ventilkörper 3 in die (nicht dargestellte) Schließstellung, bei der die Durchgangsöffnungen 5 verschlossen sind. Da die Federkraft mit dem Federweg ansteigt, schließt das Ventil VFV tatsächlich erst bei einem geringfügig höheren Druck als demjenigen Druck, an dem sich der Ventilkörper in Richtung auf die Durchgangsöffnungen 5 zu bewegen beginnt.

Im letzten Moment der Verlagerung des Ventilkörpers 3, das heißt kurz bevor der Ventilkörper 3 die Durchgangsöffnungen 5 mit seiner Stirnfläche 7 verschließt, wirken die einander gegenüber liegenden Kanten der Stirnfläche 7 und der Durchgangsöffnungen 5 ihrerseits wie eine Drossel oder Blende. Aufgrund des dadurch bedingten erhöhten Druckverlustes in der Strömung wird die Stirnfläche 7 an die Durchgangsöffnungen 5 angesaugt und verschließt diese zuverlässig.

Anstelle der Drossel 8 kann in dem Ventilköper 3 auch eine Blende vorgesehen sein, welche genauso wie eine Drossel im Falle ihrer Durchströmung einen Druckverlust in der Strömung verursacht. Außerdem ist es möglich, statt einer Drossel oder Blende mehrere Drosseln oder Blenden oder sowohl Drosseln als auch Blenden in den Ventilkörper 3 zu integrieren. Die Drosseln und Blenden können auch am Umfang des Ventilkörpers 3 im Zusammenwirken mit dem äußeren Gehäuseteil 1 realisiert sein. Diese oder ähnliche konstruktive Änderungen an dem Ventil VFV ändern an dem grundlegenden Konstruktionsprinzip nichts.

Wird ein solches Ventil VFV in ein Hydrauliksystem gemäß dem Hydraulikschaltplan aus Figur 1 eingesetzt, nämlich in die Bypassleitung BL, so wird das Ventil VFV und damit auch der Durchfluss durch die Bypassleitung BL verschlossen, sobald ein Volumenstrom durch die Blende 8 des Ventilkörpers 3 fließt, der einen ausreichend großen Druckverlust über die Drossel 8 verursacht, um den Ventilkörper 3 entgegen der Vorspannkraft des Federelements 4 in die nicht dargestellte Endposition zu verlagern, in der die Durchgangsöffnungen 5 des Ventils VFV verschlossen sind und damit ein Durchfluss durch die Bypassleitung BL blockiert ist. Jedoch kann beim Vorgang des Evakuierens des Hydrauliksystems über dasselbe Ventil VFV ein relativ hoher Luftvolumenstrom durch das Ventil VFV gezogen werden, weil Luft eine deutlich geringere Dichte besitzt als die üblichen Hydraulikmedien.

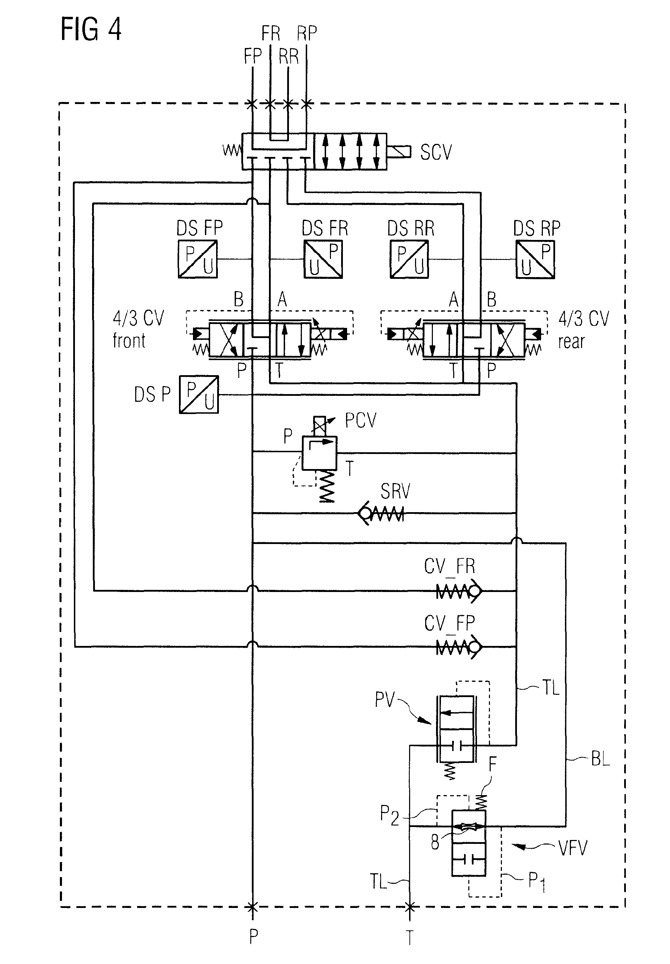

In Figur 4 ist ein zweites Ausführungsbeispiel dargestellt, welches sich von dem in Bezug auf Figur 1 beschriebenen Ausführungsbeispiel dadurch unterscheidet, dass die Bypassleitung BL nicht lediglich das Vorspannventil PV überbrückt, also nicht lediglich eine Bypassleitung zur Tankleitung TL ist, sondern dass die Bypassleitung BL unter Umgehung aller übrigen Komponenten des Ventilblocks unmittelbar mit dem zur Pumpe führenden Druckanschluss P verbunden ist. Entsprechend könnte die Bypassleitung BL auch von jeder anderen Leitung des Hydrauliksystems abzweigen und zur Tankleitung TL führen, vorausgesetzt dass die Bypassleitung BL in Durchflussrichtung erst hinter dem Vorspannventil PV an die Tankleitung TL anschließt und somit das Vorspannventil PV auf jeden Fall überbrückt.

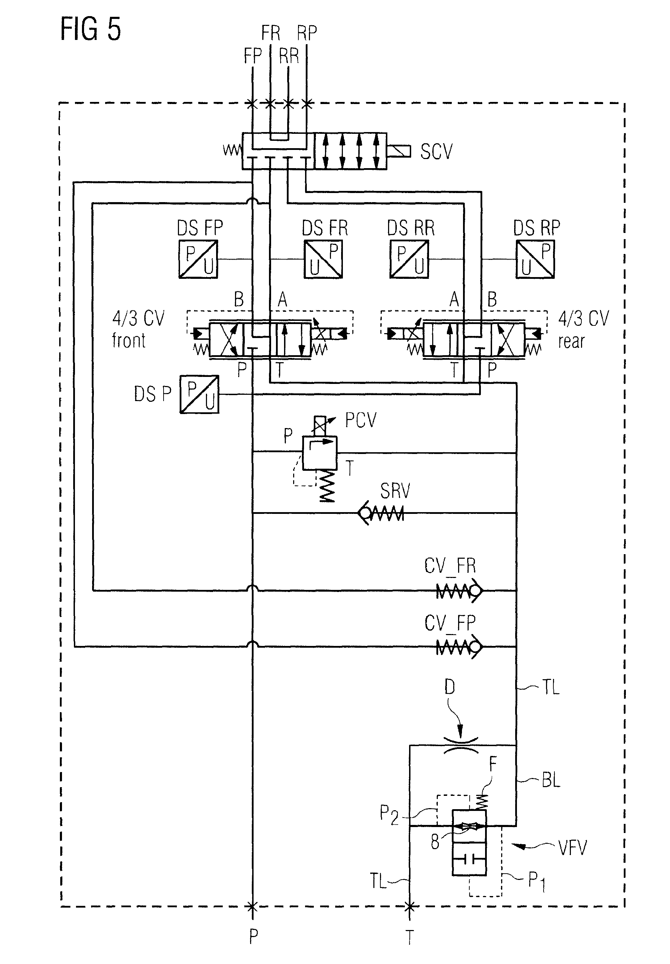

Figur 5 zeigt ein drittes Ausführungsbeispiel, welches sich von dem in Bezug auf Figur 1 beschriebenen ersten Ausführungsbeispiel nur dadurch unterscheidet, dass anstelle des Vorspannventils PV eine Blende oder Drossel D in der Tankleitung TL als Strömungshindernis vorgesehen ist, welche von der Bypassleitung BL mit dem darin integrierten Evakuier- und Befüllventil VFV überbrückt wird. Ab einem bestimmten Volumenstrom durch die Blende oder Drossel D entsteht ein so hoher Druckverlust über die Blende oder Drossel D, dass der in dem Ventil VFV vorgegebene Differenzdruck erreicht und überschritten wird, so dass das Ventil VFV selbsttätig schließt.

Selbstverständlich kann auch in dem Ausführungsbeispiel gemäß Figur 4 das Vorspannventil PV durch eine Blende oder Drossel D ersetzt werden.

## Patentansprüche

1. Hydrauliksystem, wie zum Beispiel ein Ventilblock, umfassend eine Tankleitung (TL) und ein Strömungshindernis (PV; D) in der Tankleitung (TL), wobei in dem Hydrauliksystem als Bypass (BL) zu dem Strömungshindernis (PV; D) eine Ventileinrichtung (VFV) zum Evakuieren und Befüllen des Hydrauliksystems vorgesehen ist,
- durch welche hindurch das Hydrauliksystem evakuiert werden kann, wenn an der Ventileinrichtung tankseitig ein Unterdruck erzeugt wird, und
- durch welche hindurch das Hydrauliksystem von der Tankseite der Ventileinrichtung (VFV) mit Hydraulikfluid befüllbar ist,
**dadurch gekennzeichnet, dass**
die Ventileinrichtung (VFV) einen Durchfluss durch den Bypass (BL) verschließt, wenn an der Ventileinrichtung (VFV) hydrauliksystemseitig ein erster Hydraulikdruck (p₁) und tankseitig ein zweiter Hydraulikdruck (p₂), der kleiner als der erste Hydraulikdruck (p₁) ist, anliegen.

2. Hydrauliksystem nach Anspruch 1, wobei die Ventileinrichtung (VFV) mindestens eine Drossel (8) oder Blende umfasst und den Durchfluss durch den Bypass (BL) verschließt, wenn an der mindestens einen Drossel oder Blende hydrauliksystemseitig der erste Hydraulikdruck (p₁) und tankseitig der zweite Hydraulikdruck (p₂) anliegen.

3. Hydrauliksystem nach Anspruch 2, wobei die wenigstens eine Drossel (8) oder Blende durch einen verschiebbar gelagerten Ventilkörper (3) gebildet wird.

4. Hydrauliksystem nach Anspruch 3, wobei der verschiebbar gelagerte Ventilkörper (3) ein oder mehrere Dichtflächen (7) zum Verschließen des Durchflusses durch den Bypass (BL) umfasst.

5. Hydrauliksystem nach einem der Ansprüche 1 bis 4, wobei die Ventileinrichtung (VFV) eine Vorspanneinrichtung (F; 4) umfasst, welche dem Verschließen des Durchflusses durch den Bypass (BL) entgegenwirkt.

6. Hydrauliksystem nach einem der Ansprüche 1 bis 5, wobei die Ventileinrichtung (VFV) ein 2-Wege-Ventil ist.

7. Hydrauliksystem nach einem der Ansprüche 1 bis 6, wobei die Ventileinrichtung (VFV) den Durchfluss durch den Bypass (BL) verschließt, wenn der erste Hydraulikdruck (p₁) weniger als 0,2 bar, vorzugsweise weniger als 0,1 bar, über dem zweiten Hydraulikdruck (p₂) liegt.

8. Hydrauliksystem nach einem der Ansprüche 1 bis 6, wobei die Ventileinrichtung (VFV) den Durchfluss durch den Bypass (BL) verschließt, wenn der erste Hydraulikdruck (p₁) mehr als 0,5 bar über dem zweiten Hydraulikdruck (p₂) liegt.

9. Hydrauliksystem nach einem der Ansprüche 1 bis 6, wobei die Ventileinrichtung (VFV) den Durchfluss durch den Bypass (BL) verschließt, wenn der erste Hydraulikdruck (p₁) 1 bar oder mehr über dem zweiten Hydraulikdruck (p₂) liegt.

10. Hydrauliksystem nach einem der Ansprüche 1 bis 9, wobei das Strömungshindernis ein Vorspannventil (PV) ist, welches so eingestellt oder einstellbar ist, dass es einen Durchflussweg durch die Tankleitung (TL) öffnet, wenn auf der Hydrauliksystemseite des Vorspannventils (PV) der Hydraulikdruck 2 bar oder mehr, vorzugsweise 10 bar oder mehr, erreicht oder überschreitet.

11. Ventil (VFV) für ein Hydrauliksystem, umfassend
- einen Durchflussweg (9, 8, 5),
- einen in dem Durchflussweg zwischen einer Schließstellung und einer Offenstellung (Fig. 3) verlagerbaren Ventilkörper (3), der den Durchflussweg in der Schließstellung verschließt und in der Offenstellung freigibt, wobei der Ventilkörper (3) mindestens eine Blende oder Drossel (8) in dem Durchflussweg bildet, und
- eine Vorspanneinrichtung (4), die den Ventilkörper (3) mit einer Vorspannkraft in die Offenstellung drängt,
**dadurch gekennzeichnet, dass** der Ventilkörper (3) in dem Durchflussweg mindestens eine erste Hydraulikdruckfläche (10a,10b) in Durchflussrichtung vor und mindestens eine zweite Hydraulikdruckfläche (7, 7a) in Durchflussrichtung hinter der mindestens einen Blende oder Drossel (8) besitzt, so dass, wenn beim Durchströmen der mindestens einen Blende oder Drossel (8) ein Druckverlust (p₁-p₂) in der Strömung auftritt, über die ersten und zweiten Hydraulikdruckflächen ein Differenzdruck auf den Ventilkörper (3) wirkt, der den Ventilkörper (3) ab einem Differenzdruck, der die Vorspannkraft der Vorspanneinrichtung (4) überwindet, in die Schließstellung bewegt.

12. Ventil nach Anspruch 11, wobei der Ventilkörper (3) ein entlang dem Durchflussweg axial verschiebbarer Kolben ist und die mindestens eine erste Hydraulikdruckfläche (10a,10b) und die mindestens eine zweite Hydraulikdruckfläche (7a, 7b) durch Stirnflächen des Kolbens gebildet werden.

13. Ventil nach Anspruch 11 oder 12, wobei die mindestens eine Blende oder Drossel (8) durch ein oder mehrere axiale Durchgangsöffnungen des Ventilkörpers (3) gebildet wird.

14. Ventil nach einem der Ansprüche 11 bis 13, wobei der Durchflussweg in der Schließstellung des Ventilkörpers (3) durch eine oder mehrere Stirnflächen (7) des Ventilkörpers (3) verschlossen wird.

15. Verwendung des Ventils (VFV) nach einem der Ansprüche 11 bis 14 als Evakuier- und Befüllventil in einem Hydrauliksystem, vorzugsweise in einem Ventilblock, einer Fahrwerksteuerung zur Wankstabilisierung eines Fahrzeugs, vorzugsweise in einem Hydrauliksystem nach einem der Ansprüche 1 bis 10.
